# EUROPEAN PATENT APPLICATION

(11) **EP 4 538 820 A1**
(43) Date of publication of application: **16.04.2025**
(21) Application number: 23838686.6
(22) Date of filing: 27.06.2023
(51) Int. Cl.: G05D 1/00

(54) **INTELLIGENT OBSTACLE AVOIDANCE METHOD, AND MOWING ROBOT AND STORAGE MEDIUM**

(30) Priority: 11.07.2022 CN 202210815218
(71) Applicant: Shenzhen Mammotion Innovation Co., Limited, Shenzhen, Guangdong 518000 (CN)
(72) Inventor: ZHANG, Weifu, Shenzhen, Guangdong 518000 (CN); WANG, Ning, Shenzhen, Guangdong 518000 (CN); HUANG, Zhenhao, Shenzhen, Guangdong 518000 (CN)
(74) Representative: Huang, Liwei
(86) International application number: PCT/CN2023/102699
(87) International publication number: WO 2024/012192

(57) **Abstract**

Disclosed in the present application is an intelligent obstacle avoidance method. An obstacle in a current path may be detected; a first obstacle avoidance path is generated with a first parameter based on a detection result, and a mowing robot is controlled to operate; if the obstacle is detected again in the first obstacle avoidance path, a second obstacle avoidance path is generated with a second parameter, and the mowing robot is controlled to operate; and the above steps are repeated until the obstacle is bypassed. In this way, the efficiency and flexibility of the mowing robot in obstacle avoidance are improved.

## Description

The present application claims priority to Chinese Patent Application No. CN202210815218.7, filed with the China National Intellectual Property Administration on July 11, 2022 and entitled "INTELLIGENT OBSTACLE AVOIDANCE METHOD, MOWING ROBOT, AND STORAGE MEDIUM", which is incorporated herein by reference in its entirety.

### Technical Field

The present application relates to the field of computer technologies, and in particular to an intelligent obstacle avoidance method, a mowing robot, and a storage medium.

### Background Art

With the continuous improvement of living standards, people's demands for leisure environment are getting higher and higher. Private gardens, parks, and playgrounds have become the best places for people's leisure and recreation. However, lawns in the private gardens, parks, and playgrounds need to be trimmed from time to time to ensure the beautiful appearance. Currently, mowing robots are usually used to replace manual trimming.

However, the mowing robots often encounter various different obstacles during operation. Existing mowing robots can detect an obstacle through a recognition apparatuses arranged on the mower, and then perform obstacle avoidance by using a navigation path planning method such as an intelligent algorithm, a visibility graph-based method, a free space method, or an artificial potential field method. However, in such a method, once an obstacle is detected, a preset path is followed for single obstacle avoidance, without an adaptive adjustment based on the specific obstacle. Therefore, such a method cannot adapt to different use scenarios, and has poor flexibility and low efficiency in obstacle avoidance.

### Summary

Embodiments of the present application provide an intelligent obstacle avoidance method, a mowing robot, and a storage medium, which can generate an obstacle avoidance path adaptively based on an obstacle, thereby improving the efficiency and flexibility of the mowing robot in obstacle avoidance.

In a first aspect, an embodiment of the present application provides an intelligent obstacle avoidance method. The method includes:
S11. detecting an obstacle in a current path during operation of a mowing robot;
S12. generating a first obstacle avoidance path with a first parameter based on a detection result, and controlling the mowing robot to operate based on the first obstacle avoidance path;
S13. if the obstacle is detected again in the first obstacle avoidance path, generating a second obstacle avoidance path with a second parameter, and controlling the mowing robot to operate based on the second obstacle avoidance path, the second parameter being greater than the first parameter; and
S14. repeating S12 and S13 until the obstacle in the current path is bypassed.

In an embodiment, the generating a first obstacle avoidance path with a first parameter based on a detection result includes:
obtaining characteristic information of the obstacle; and
calculating the first parameter based on the characteristic information of the obstacle, and generating the first obstacle avoidance path along a current mowing direction with the first parameter.

In an embodiment, the characteristic information of the obstacle includes a horizontal width of the obstacle; and
the calculating the first parameter based on the characteristic information of the obstacle, and generating the first obstacle avoidance path along a current mowing direction with the first parameter includes:
calculating a first length range based on the horizontal width of the obstacle, and
generating the first obstacle avoidance path along the current mowing direction that satisfies the first length range.

In an embodiment, the generating the first obstacle avoidance path along the current mowing direction that satisfies the first length range includes:
determining a side length parameter based on the first length range, and generating a first polyline path along the current mowing direction with the side length parameter; and/or
determining an arc angle parameter and an arc length parameter based on the first length range, and generating a first arc path along the current mowing direction with the arc angle parameter and the arc length parameter.

In an embodiment, the generating a second obstacle avoidance path with a second parameter, and controlling the mowing robot to operate based on the second obstacle avoidance path includes:
updating the characteristic information of the obstacle;
determining the second parameter with updated characteristic information, and generating the second obstacle avoidance path based on the second parameter; and
controlling the mowing robot to return to a starting point of the first obstacle avoidance path, and controlling the mowing robot to operate based on the second obstacle avoidance path.

In an embodiment, after the obstacle is detected again in the first obstacle avoidance path, the method further includes:
determining whether the obstacle moves when the mowing robot operates based on the first obstacle avoidance path; and
if the obstacle does not move, performing the step of generating a second obstacle avoidance path with a second parameter, or
if the obstacle moves, generating a first obstacle avoidance path again with a current position of the mowing robot, and controlling the mowing robot to operate based on the first obstacle avoidance path.

In an embodiment, the generating a first obstacle avoidance path with a first parameter based on a detection result includes:
dividing a horizontal angle of the obstacle into a left deflection angle and a right deflection angle along an orientation of the mowing robot;
comparing the left deflection angle with the right deflection angles to determine a deflection direction; and
generating the first obstacle avoidance path based on the deflection direction and the first parameter.

In an embodiment, the method further includes:
obtaining a number of times the obstacle is detected again in the first obstacle avoidance path; and
generating warning information to prompt a user when the number of times exceeds a preset number of times.

In a second aspect, an embodiment of the present application provides a mowing robot, including a memory, a processor, and a computer program stored on the memory and executable on the processor. The program, when executed by the processor, causes the steps of the intelligent obstacle avoidance method described above to be implemented.

In a third aspect, an embodiment of the present application provides a storage medium storing a computer program. The computer program, when executed by a processor, causes the intelligent obstacle avoidance method described above to be implemented.

According to the intelligent obstacle avoidance method provided in the embodiments of the present application, the obstacle in the current path may be detected during operation of the mowing robot; the first obstacle avoidance path is generated with the first parameter based on the detection result, and the mowing robot is controlled to operate based on the first obstacle avoidance path; if the obstacle is detected again in the first obstacle avoidance path, the second obstacle avoidance path is generated with the second parameter, and the mowing robot is controlled to operate based on the second obstacle avoidance path, where the second parameter is greater than the first parameter; and the above steps are repeated until the obstacle in the current path is bypassed. In the embodiments of the present application, the first obstacle avoidance path is generated when the obstacle is detected, and the second obstacle avoidance path with a larger range is generated when the obstacle is detected again during traveling of the mowing robot along the first obstacle avoidance path. In this way, an obstacle avoidance path can be generated adaptively, thereby improving the efficiency and flexibility of the mowing robot in obstacle avoidance.

### Brief Description of the Drawings

In order to more clearly describe the technical solutions in the embodiments of the present application, the accompanying drawings necessary for describing the embodiments will be briefly described below. Apparently, the accompanying drawings in the description below merely show some of the embodiments of the present application, and those skilled in the art would have obtained other drawings from these drawings without involving any inventive effort.
FIG. 1 is a schematic diagram of a scenario of an intelligent obstacle avoidance method according to an embodiment of the present application;
FIG. 2 is a schematic flowchart of an intelligent obstacle avoidance method according to an embodiment of the present application;
FIG. 3 is a schematic diagram of a route design according to an embodiment of the present application;
FIG. 4 is a schematic diagram of path generation according to an embodiment of the present application;
FIG. 5 is another schematic diagram of path generation according to an embodiment of the present application;
FIG. 6 is another schematic flowchart of an intelligent obstacle avoidance method according to an embodiment of the present application;
FIG. 7 is a schematic diagram of calculating a deflection direction according to an embodiment of the present application;
FIG. 8 is still another schematic diagram of path generation according to an embodiment of the present application;
FIG. 9 is a schematic diagram of a structure of an intelligent obstacle avoidance apparatus according to an embodiment of the present application;
FIG. 10 is another schematic diagram of a structure of an intelligent obstacle avoidance apparatus according to an embodiment of the present application; and
FIG. 11 is a schematic diagram of a structure of an electronic device according to an embodiment of the present application.

### Detailed Description of Embodiments

The technical solutions in the embodiments of the present application will be described clearly and completely below with reference to the accompanying drawings in the embodiments of the present application. Apparently, the described embodiments are only some rather than all of the embodiments of the present application. All the other embodiments obtained by those skilled in the art based on the embodiments of the present application without creative efforts shall fall within the scope of protection of the present application.

It should be noted that when an element is referred to as being "fixed to" or "disposed" on another element, it may be directly on or indirectly on another element. When an element is referred to as being "connected" to another element, it may be directly or indirectly connected to another element. In addition, the connection may have the function of fixing or circuit connection.

It should be understood that the orientation or positional relationships indicated by the terms "length", "width", "upper", "lower", "front", "rear", "left", "right", "vertical", "horizontal", "top", "bottom", "inner", "outer", etc. are based on the orientation or positional relationship shown in the accompanying drawings and are only for facilitating the description of the embodiments of the disclosure and simplifying the description, rather than indicating or implying that an apparatus or an element referred to must have a particular orientation or be constructed and operated in a particular orientation, and therefore will not be interpreted as limiting the disclosure.

In addition, the terms "first" and "second" are merely used for the purpose of illustration, and cannot be construed as indicating or implying relative importance or implicitly indicating the number of technical features indicated. Thus, the features defined with "first" and "second" may explicitly or implicitly include one or more features. In the description of the embodiments of the present application, "a plurality of" means two or more, unless specifically defined otherwise.

The embodiments of the present application provide an intelligent obstacle avoidance method and apparatus, a mowing robot and a storage medium.

The intelligent obstacle avoidance apparatus may be integrated particularly in a microcontroller unit (MCU) of the mowing robot, or integrated in an intelligent terminal or server. The MCU, also referred as a single-chip microcomputer or microcontroller, is designed to reduce the frequency and specifications of a central process unit (CPU) and integrates peripheral interfaces such as a memory, a timer, a USB, an analog to digital converter/digital to analog converter, a UART, a PLC and a DMA to form a chip-level computer so as to provide different combined controls for different applications. The mowing robot may walk automatically, prevent collisions, return for charging automatically within a range, is provided with safety detection and battery level detection, and has a certain climbing ability, is especially suitable for lawn trimming and maintenance in places such as home courtyards, public green space, etc., and has the characteristics of automatic grass cutting, cleanup of grass chips, automatic rain protection, automatic charging, automatic obstacle avoidance, small form factor, electronic virtual fencing, network control, etc.

The terminal may be a smartphone, a tablet, a laptop, a desktop computer, a smart speaker, a smart watch, etc., but not limited to those. The terminal and the server may be connected directly or indirectly by means of wired or wireless communication, the server may be a separate physical server, a cluster or distributed system of multiple physical servers, or a cloud server which provides cloud services, cloud databases, cloud computing, cloud functions, cloud storage, network services, cloud communications, middleware services, domain name services, security services, CDNs and basic cloud computing services such as big data and artificial intelligence platforms, and is not limited in the present application.

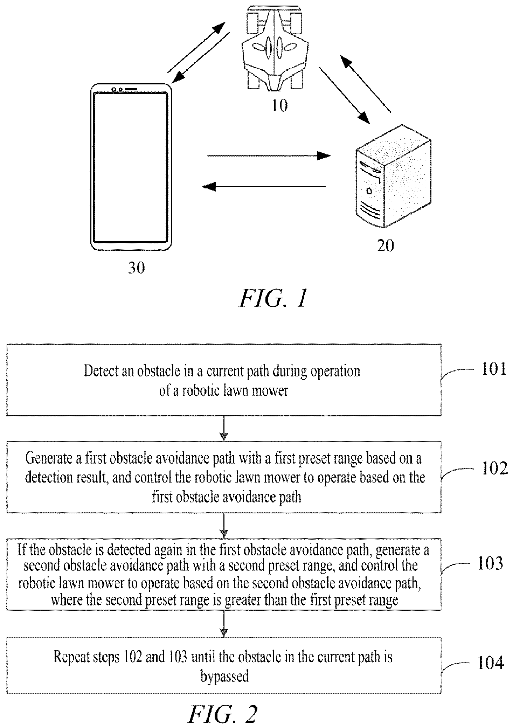

For example, referring to FIG. 1, the present application provides a mowing system, including a mowing robot 10, a server 20 and a user device 30 which are in communication connection with one another. A user may use the user device 30 to control the mowing robot 10 to perform obstacle detection during traveling. Specifically, in an embodiment of the present application, a variety of sensors may be integrated into the mowing robot 10. For example, a rain sensor may be provided on the top of the mowing robot 10 to detect whether it is raining, a lateral ultrasonic sensor and an infrared sensor may be provided on sides of the mowing robot 10, and impact sensors may be provided around the mowing robot 10. The variety of sensors may be combined to implement obstacle detection. When an obstacle is detected in a current path of the mowing robot 10, a first obstacle avoidance path may be generated to operate.

During the operation, the user may also use the user device 30 to control and adjust in real time a movement path, a movement speed, a mowing range, etc, of the mowing robot 10. After the operation is completed, data corresponding to the mowing operation may further be synchronized to the server 20, so that it is convenient for the user to view.

For example, the mowing robot 10 starts operation in response to a user instruction which may be generated and sent by the user device 30. During the operation, the mowing robot 10 detects an obstacle in the current path, and generate a first obstacle avoidance path for operation with a first parameter based on a detection result, and if the obstacle is detected again in the first obstacle avoidance path, generate a second obstacle avoidance path for operation with a second parameter, thereby avoiding the obstacle.

Detailed descriptions are provided below. It should be note that order in which the following embodiments are described is not intended to limit the order of precedence of the embodiments.

An intelligent obstacle avoidance method includes: detecting an obstacle in a current path during operation of a mowing robot; generating a first obstacle avoidance path with a first parameter based on a detection result, and controlling the mowing robot to operate based on the first obstacle avoidance path; if the obstacle is detected again in the first obstacle avoidance path, generating a second obstacle avoidance path with a second parameter, and controlling the mowing robot to operate based on the second obstacle avoidance path, where the second parameter is greater than the first parameter; and repeating the above steps until the obstacle in the current path is bypassed.

Referring to FIG. 2, FIG. 2 is a schematic flowchart of an intelligent obstacle avoidance method according to an embodiment of the present application. The intelligent obstacle avoidance method may have a specific process as follows.

101: Detect an obstacle in a current path during operation of a mowing robot.

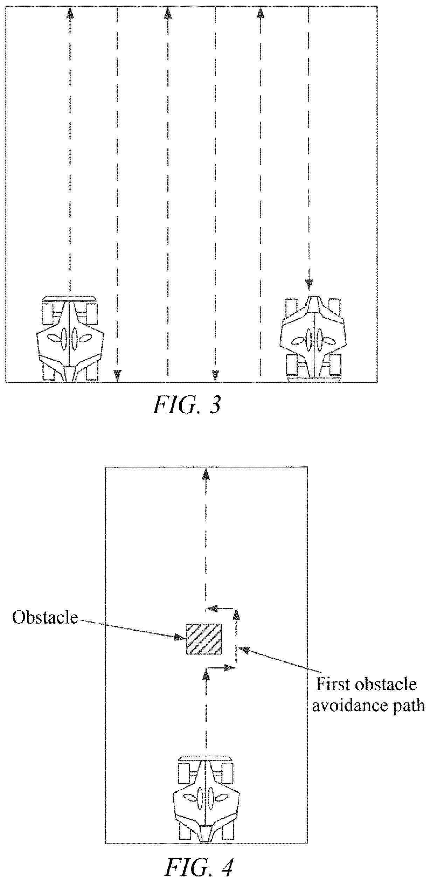

In an embodiment, the mowing robot may mow in a pre-bounded operation region and plan a corresponding movement path based on the operation region. As shown in FIG. 3, after the mowing robot starts operation, a movement path is generated throughout the current region, ensuring that the movement path can cover the entire current region. For example, turning points are set based on a boundary of the current region, a zigzag movement path is generated as the movement path based on the turning points, and a mowing operation is performed based on the movement path.

In an embodiment, when traveling and mowing based on the initial movement path described above, the mowing robot may further detect in real time whether an obstacle is encountered in the current path. Specifically, the detection may be implemented by using various sensors integrated on the mowing robot. The sensors may include at least one of: an impact sensor, a depth sensor, an ultrasonic sensor, and an infrared sensor.

Specifically, after being turned on, the various sensors arranged on the mowing robot may collect detection data in real time, or at a fixed operating frequency, at preset intervals. A specific type of the detection data is determined by a type of the sensor. For example, detection data collected by the impact sensor is impact data, detection data collected by the depth sensor is depth data, detection data collected by the ultrasonic sensor is ultrasonic data, detection data collected by the infrared sensor is infrared data, and so on.

In an embodiment, the infrared sensor is used as an example for description. The infrared sensor performs obstacle detection mainly by a method as follows. A part of a region is aimed at by means of an infrared ray. An emission system is used to emit an infrared signal to the region in front of the mowing robot. A sampler samples the emitted signal as an enabling pulse signal of a counter to enable the counter, and a clock oscillator effectively inputs count pulses to the counter. An infrared echo reflected back from a target acts on a photoelectric detector and is converted into an electrical pulse signal. After amplified by an amplifier, the electrical pulse signal enters the counter as a disabling signal of the counter, so that the counter stops counting. A number of clock pulses entering the counter between the enabling and the disabling is calculated to obtain a distance to each point in the target region, thereby preliminarily determining whether there is an obstacle in the part of the region. Optionally, a detection range of the sensor may further be set. For example, the sensor is used to detect whether there is an obstacle within a range of 1 m in front of the mowing robot. If there is no obstacle within this range, the mowing robot may continue to mow based on its travel path; or if there is an obstacle within this range, step 102 may be subsequently performed.

102: Generate a first obstacle avoidance path with a first parameter based on a detection result, and control the mowing robot to operate based on the first obstacle avoidance path.

In an embodiment, the first obstacle avoidance path may be generated with the first parameter if the mowing robot encounters an obstacle during operation. The first parameter may be preset or may be generated through calculation based on the detection result of the obstacle. The first parameter may include a length, an angle, etc. For example, the first obstacle avoidance path may be a polyline of a preset length. Referring to FIG. 4, in this embodiment, after a mowing robot encounters an obstacle, a polyline of a preset length formed by three line segments may be generated, so that the mowing robot may be controlled to operate based on the polyline to bypass the obstacle.

In another embodiment, the first obstacle avoidance path may alternatively be a semicircular path with a preset radius or an arc path with a preset arc length. Control of the mowing robot to travel based on the semicircular path or the arc path may allow the mowing robot to bypass the obstacle and return to the initial movement path after the bypassing.

In an embodiment, the first parameter may be further adaptively adjusted. For example, when an obstacle is detected on the movement path, characteristic information of the obstacle may be further obtained. For example, the detection data currently acquired by the sensors may be processed and analyzed, to obtain information such as a shape, a contour, and a position of the obstacle in a current environment. The first parameter is then calculated based on the characteristic information, and the corresponding first obstacle avoidance path is generated. That is, the step of generating a first obstacle avoidance path with a first parameter based on a detection result may include: obtaining the characteristic information of the obstacle, calculating the first parameter based on the characteristic information of the obstacle, and generating the first obstacle avoidance path along a current mowing direction with the first parameter.

In an embodiment, after preliminary detection of an obstacle, the mowing robot may obtain depth information of a current scene according to the triangulation principle by using a vision sensor, and may reconstruct a three-dimensional shape and a position of a surrounding object, which is similar to the stereopsis of human eyes. Therefore, 3D information of the detected obstacle in space can be determined. That is, after preliminary detection of the obstacle, the position corresponding to the obstacle is determined, and then the position is further detected or scanned again by a visual recognition system, to obtain the characteristic information of the obstacle. This is used for supplementary determination on the basis of the sensors, to further confirm the characteristic information of the obstacle, thereby improving the accuracy of obstacle determination.

After an obstacle is detected on the initial movement path, the first obstacle avoidance path whose starting point and ending point both are located in the initial movement path may be generated in combination with characteristic information such as a size, volume, area, and height of the obstacle, so that the mowing robot avoids the obstacle and continues to operate along the initial movement path after the avoidance.

In an embodiment, when the first obstacle avoidance path that avoids the obstacle is generated, the position of the mowing robot where the obstacle is encountered is usually not designed as the starting point of the first obstacle avoidance path. Moreover, when the obstacle is detected, the mowing robot is often very close to the obstacle. Therefore, before the mowing robot is controlled to operate based on the first obstacle avoidance path, the mowing robot may further be controlled to return to the starting point of the first obstacle avoidance path and then to travel based on the first obstacle avoidance path.

103: If the obstacle is detected again in the first obstacle avoidance path, generate a second obstacle avoidance path with a second parameter, and control the mowing robot to operate based on the second obstacle avoidance path, where the second parameter is greater than the first parameter.

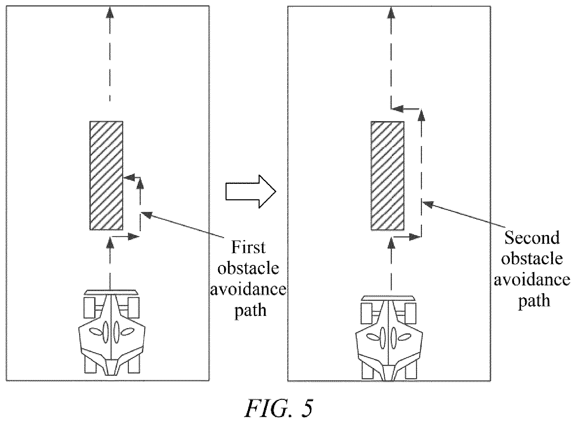

In an embodiment, considering that in actual applications, if the obstacle encountered by the mowing robot is large in size or irregular in shape, the mowing robot may encounter the obstacle again when traveling based on the first obstacle avoidance path, i.e., fails to bypass the obstacle. For example, if the mowing robot directly hits the obstacle in the latter half of the first obstacle avoidance path when traveling based on the path, a position where the obstacle is encountered again may be used as the starting point, and a second obstacle avoidance path is again generated so that the obstacle is again bypassed. Specifically, if the mowing robot encounters the obstacle again when traveling based on the first obstacle avoidance path, the second obstacle avoidance path may be generated based on a second parameter greater than the first parameter. As shown in FIG. 5, a mowing robot may further increase a length of the polyline, then make a detour, and finally return to the initial movement path to continue to operate after bypassing an obstacle.

104: Repeat steps 102 and 103 until the obstacle in the current path is bypassed.

For example, an MCU in the mowing robot may control the mowing robot to perform the mowing operation based on the first obstacle avoidance path or the second obstacle avoidance path. For another example, the server or the user device may control the mowing robot to travel based on the first obstacle avoidance path or the second obstacle avoidance path to perform the mowing operation. That is, the mowing robot performs the mowing operation based on the first obstacle avoidance path or the second obstacle avoidance path, and after the first obstacle avoidance path or the second obstacle avoidance path is completed, the mowing robot is controlled to continue the initial movement path, and continue to detect an obstacle.

It should be noted that when the obstacle is not successfully bypassed based on the first obstacle avoidance path, the mowing robot may further return to the starting point of the first obstacle avoidance path along the first obstacle avoidance path and operate again from the starting point based on the second obstacle avoidance path.

In an embodiment, if the obstacle is still not successfully bypassed based on the second obstacle avoidance path, the second parameter may continue to be increased and a new obstacle avoidance path is generated again until the obstacle is successfully bypassed. It is considered that in actual applications, there may be an obstacle that the mowing robot cannot bypass regardless of the obstacle avoidance path, such as a heavy object located against a wall, or an animal that is always moving to block the movement route of the mowing robot. Therefore, in the embodiments of the present application, when a number of times the mowing robot encounters an obstacle is greater than a preset value during the obstacle avoidance, the obstacle avoidance may be stopped, and a warning may be given to inform the user. That is, the method may further include: obtaining a number of times the obstacle is detected again in the first obstacle avoidance path, and generating warning information to prompt a user when the number of times exceeds a preset number of times.

As can be learned from the above, according to the intelligent obstacle avoidance method provided in the embodiments of the present application, the obstacle in the current path may be detected during operation of the mowing robot; the first obstacle avoidance path may be generated with the first parameter based on the detection result, and the mowing robot may be controlled to operate based on the first obstacle avoidance path; if the obstacle is detected again in the first obstacle avoidance path, the second obstacle avoidance path may be generated with the second parameter, and the mowing robot may be controlled to operate based on the second obstacle avoidance path, where the second parameter is greater than the first parameter; and the above steps may be repeated until the obstacle in the current path is bypassed. In the embodiments of the present application, the first obstacle avoidance path is generated when the obstacle is detected, and the second obstacle avoidance path with a larger range is generated when the obstacle is detected again during traveling of the mowing robot along the first obstacle avoidance path. In this way, an obstacle avoidance path can be generated adaptively, thereby improving the efficiency and flexibility of the mowing robot in obstacle avoidance.

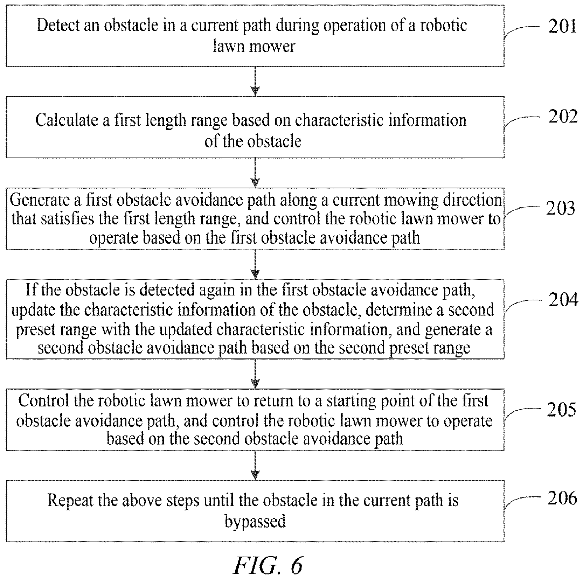

Referring to FIG. 6, FIG. 6 is another schematic flowchart of an intelligent obstacle avoidance method according to an embodiment of the present application. The intelligent obstacle avoidance method may have a specific process as follows.

201: Detect an obstacle in a current path during operation of a mowing robot.

In an embodiment, when traveling and mowing based on the initial movement path, the mowing robot may detect in real time whether an obstacle is encountered in the current path. Specifically, the detection may be implemented by using various sensors integrated on the mowing robot. For the detection process, reference may be made to the above description, which is not further limited in this embodiment. If no obstacle is detected, the mowing robot may continue to mow based on the initial movement path; or if an obstacle is detected, step 201 is subsequently performed.

202: Calculate a first length range based on characteristic information of the obstacle.

In an embodiment, the characteristic information of the obstacle may include a horizontal width of the obstacle, and after detecting the horizontal width of the obstacle, the mowing robot may calculate a length range required to bypass the obstacle based on the width, i.e., may calculate the first length range based on the horizontal width of the obstacle.

203: Generate a first obstacle avoidance path along a current mowing direction that satisfies the first length range, and control the mowing robot to operate based on the first obstacle avoidance path.

In an embodiment, after detecting the horizontal width of the obstacle, the mowing robot may calculate an optimal side length parameter based on the horizontal width, to generate a corresponding polyline path as the first obstacle avoidance path. For another example, an optimal arc angle and arc length may alternatively be calculated based on the horizontal width, to generate a corresponding arc path as the first obstacle avoidance path. For example, for a small obstacle, an arc path corresponding to a large arc angle and a short arc length may be generated through calculation, while for a large obstacle, an arc path corresponding to a small arc angle and a long arc length may be generated. That is, the step of generating a first obstacle avoidance path along a current mowing direction that satisfies the first length range may include: determining a side length parameter based on the first length range, and generating a first polyline path along the current mowing direction with the side length parameter; and/or determining an arc angle parameter and an arc length parameter based on the first length range, and generating a first arc path along the current mowing direction with the arc angle parameter and the arc length parameter.

Further, after the first obstacle avoidance path is generated, the first obstacle avoidance path may be spliced with the initial movement path of the mowing robot, to form a complete path for the mowing robot to operate. For example, the first obstacle avoidance path is intersected with the initial movement path to generate a final movement path in the current mowing direction based on intersection points.

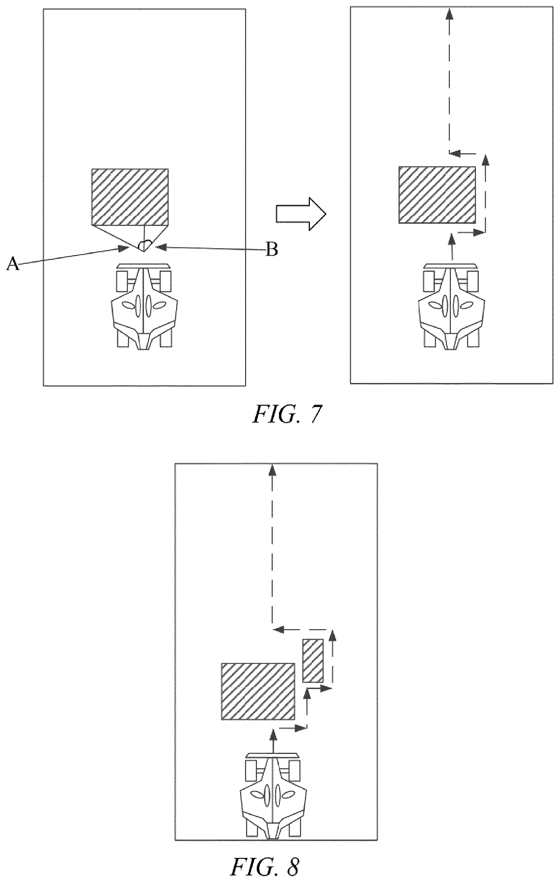

In an embodiment, referring to FIG. 7, when generating a first obstacle avoidance path, a mowing robot may further determine a deflection direction based on an obstacle, to generate a left-deflected first obstacle avoidance path or a right-deflected first obstacle avoidance path. Specifically, an angle range of the obstacle may be divided into a left deflection angle A and a right deflection angle B along an orientation of the mowing robot. When the left deflection angle A is greater than the right deflection angle B, right deflection may be selected to generate the first obstacle avoidance path, so that the obstacle avoidance can be performed more quickly. Therefore, the step of generating a first obstacle avoidance path along a current mowing direction that satisfies the first length range may include: dividing a horizontal angle of the obstacle into a left deflection angle and a right deflection angle along an orientation of the mowing robot; comparing the left deflection angle with the right deflection angles to determine a deflection direction; and generating the first obstacle avoidance path based on the deflection direction and the first length range.

204: If the obstacle is detected again in the first obstacle avoidance path, update the characteristic information of the obstacle, determine a second parameter with updated characteristic information, and generate a second obstacle avoidance path based on the second parameter.

In an embodiment, if the mowing robot encounters the obstacle again when traveling based on the first obstacle avoidance path, i.e., fails to bypass the obstacle, the mowing robot may generate the second obstacle avoidance path again and make a detour again. Specifically, the mowing robot may re-detect the characteristic information of the obstacle when encountering the obstacle again, and determine the second parameter based on the re-detected characteristic information, to generate the second obstacle avoidance path based on the second parameter.

It should be noted that if the mowing robot encounters an obstacle again when traveling based on the first obstacle avoidance path, it is also necessary to first determine whether the obstacle is still the previous obstacle. Specifically, the determination may be made by determining whether the obstacle moves when the mowing robot travels based on the first obstacle avoidance path. That is, after the obstacle is detected again in the first obstacle avoidance path, the method may further include: determining whether the obstacle moves when the mowing robot operates based on the first obstacle avoidance path; and if the obstacle does not move, performing the step of generating a second obstacle avoidance path with a second parameter, or if the obstacle moves, generating a first obstacle avoidance path again with a current position of the mowing robot, and controlling the mowing robot to operate based on the first obstacle avoidance path.

205: Control the mowing robot to return to a starting point of the first obstacle avoidance path, and control the mowing robot to operate based on the second obstacle avoidance path.

In an embodiment, the second parameter is greater than the first parameter. Therefore, when the mowing robot fails to bypass the obstacle based on the first obstacle avoidance path, the mowing robot may further return to the starting point of the first obstacle avoidance path along the first obstacle avoidance path and operate again from the starting point position based on the second obstacle avoidance path.

206: Repeat the above steps until the obstacle in the current path is bypassed.

After generating the second obstacle avoidance path, the mowing robot may perform the mowing operation based on the second obstacle avoidance path. In this process, if the mowing robot detects a further obstacle again, as shown in FIG. 8, the mowing robot may continue to obtain characteristic information of the further obstacle, and continue to generate a first obstacle avoidance path over a current path based on the characteristic information, to bypass both the original obstacle and the further obstacle, and complete mowing.

As can be learned from the above, according to the intelligent obstacle avoidance method provided in the embodiments of the present application, the obstacle in the current path may be detected during operation of the mowing robot; the first length range is calculated based on the characteristic information of the obstacle; the first obstacle avoidance path along the current mowing direction that satisfies the first length range is generated, and the mowing robot is controlled to operate based on the first obstacle avoidance path; and if the obstacle is detected again in the first obstacle avoidance path, the characteristic information of the obstacle is updated, the second parameter is determined with the updated characteristic information, and the second obstacle avoidance path is generated based on the second parameter; the mowing robot is controlled to return to the starting point of the first obstacle avoidance path, and the mowing robot is controlled to operate based on the second obstacle avoidance path; and the above steps are repeated until the obstacle in the current path is bypassed. In the embodiments of the present application, the first obstacle avoidance path is generated when the obstacle is detected, and the second obstacle avoidance path with a larger range is generated when the obstacle is detected again during traveling of the mowing robot along the first obstacle avoidance path. In this way, an obstacle avoidance path can be generated adaptively, thereby improving the efficiency and flexibility of the mowing robot in obstacle avoidance.

In order to better implement the intelligent obstacle avoidance method of the embodiments of the present application, an embodiment of the present application further provides an intelligent obstacle avoidance apparatus based on the above. The terms have the same meaning as those in the above intelligent obstacle avoidance method, and for detailed implementation details, reference may be made to the description of the embodiments of the method.

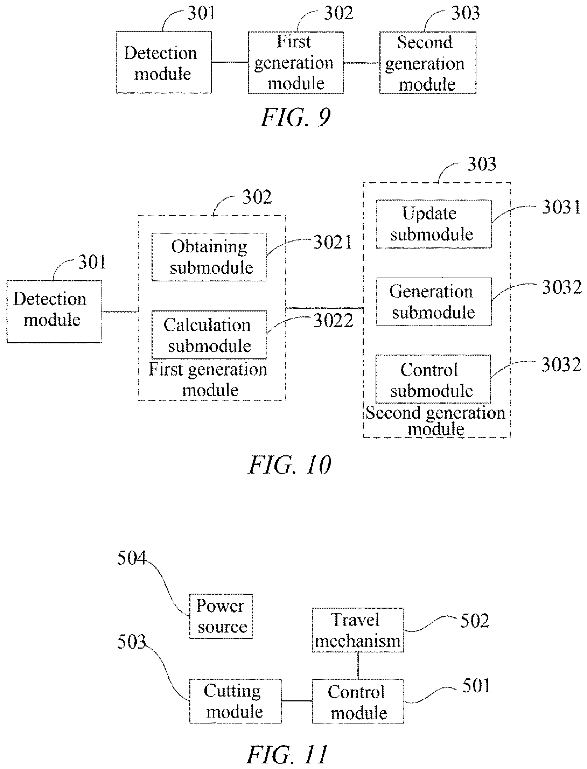

Referring to FIG. 9, FIG. 9 is a schematic diagram of a structure of an intelligent obstacle avoidance apparatus according to an embodiment of the present application. The intelligent obstacle avoidance apparatus may include:
a detection module 301 configured to detect an obstacle in a current path during operation of a mowing robot;
a first generation module 302 configured to generate a first obstacle avoidance path with a first parameter based on a detection result, and control the mowing robot to operate based on the first obstacle avoidance path; and
a second generation module 303 configured to, if the obstacle is detected again in the first obstacle avoidance path, generate a second obstacle avoidance path with a second parameter, and control the mowing robot to operate based on the second obstacle avoidance path, where the second parameter is greater than the first parameter.

The first generation module 302 and the second generation module 303 are repeatedly run until the obstacle in the initial path is bypassed.

In an embodiment, referring to FIG. 10, a first generation module 302 may include:
an obtaining submodule 3021 configured to obtain characteristic information of an obstacle; and
a calculation submodule 3022 configured to calculate a first parameter based on the characteristic information of the obstacle, and generate a first obstacle avoidance path along a current mowing direction with the first parameter.

In an embodiment, the characteristic information of the obstacle includes a horizontal width of the obstacle, and the calculation submodule 3022 may be specifically configured to calculate a first length range based on the horizontal width of the obstacle, and generate the first obstacle avoidance path along a current mowing direction that satisfies the first length range.

In an embodiment, a second generation module 303 may include:
an update submodule 3031 configured to update the characteristic information of the obstacle;
a generation submodule 3032 configured to determine the second parameter with updated characteristic information, and generate a second obstacle avoidance path based on the second parameter; and
a control submodule 3033 configured to control a mowing robot to return to a starting point of the first obstacle avoidance path, and control the mowing robot to operate based on the second obstacle avoidance path.

As can be learned from the above, According to this embodiment of the present application, the detection module 301 may detect the obstacle in the current path during operation of the mowing robot; the first generation module 302 generates the first obstacle avoidance path with the first parameter based on the detection result, and controls the mowing robot to operate based on the first obstacle avoidance path; if the obstacle is detected again in the first obstacle avoidance path, the second generation module 303 generates the second obstacle avoidance path with the second parameter, and controls the mowing robot to operate based on the second obstacle avoidance path, where the second parameter is greater than the first parameter; and the above steps are repeated until the obstacle in the current path is bypassed. In the embodiments of the present application, the first obstacle avoidance path is generated when the obstacle is detected, and the second obstacle avoidance path with a larger range is generated when the obstacle is detected again during traveling of the mowing robot along the first obstacle avoidance path. In this way, an obstacle avoidance path can be generated adaptively, thereby improving the efficiency and flexibility of the mowing robot in obstacle avoidance.

In addition, an embodiment of the present application further provides a mowing robot. As shown in FIG. 11, a schematic diagram of a structure of the mowing robot according to the embodiment of the present application is shown.

Specifically, the mowing robot may include components such as a control module 501, a travel mechanism 502, a cutting module 503, and a power source 504. Those skilled in the art will appreciate that the structure of the electronic device shown in FIG. 11 does not impose a limitation on the electronic device, and may include more or fewer components than those shown, a combination of some components or a different arrangement of components.

The control module 501 is a control center of the mowing robot, the control module 501 may particularly include components such as a central process unit (CPU), a memory, an input/output port, a system bus, a timer/counter, a digital-to-analog converter and an analog-to-digital converter. The CPU performs various functions of the mowing robot and processes data by running or executing software programs and/or modules stored in the memory and calling the data stored in the memory. Preferably, the CPU can integrate an application processor and a modem processor, where the application processor mainly processes operating systems and applications, etc., and the modem processor mainly processes wireless communications. It may be understood that the above mentioned modem processor may also not be integrated into the CPU.

The memory may be used to store software programs and modules, and the CPU executes various functional applications and processes data by running the software programs and modules stored in the memory. The memory may mainly include a program storage area and a data storage area, where the program storage area can store an operating system, an application required by at least one function (such as a sound play function, image play function, etc.); the data storage area can store data created during the use of the electronic device, or the like. In addition, the memory may include a high-speed random access memory, and may also include a non-volatile memory, such as at least one disk storage device and a flash memory device, or other volatile solid-state storage devices. Accordingly, the memory may also include a memory controller to provide an access by the CPU to the memory.

The travel mechanism 502 is electrically connected to the control module 501 for adjusting the travel speed and direction of the mowing robot in response to control signals transmitted by the control module 501 to implement the self-moving function of the mowing robot.

The cutting module 503 is electrically connected to the control module 501 and is configured to adjust the height and speed of the cutter disc in response to the control signals transmitted by the control module to carry out the mowing operation.

The power source 504 may be logically connected to the control module 501 by means of a power management system, so as to implement the functions, such as charging management, discharging management and power consumption management, by means of the power management system. The power source 504 may also include any of more than one DC or AC power source, a recharging system, a power failure detection circuit, a power converter or an inverter, and a power status indicator, etc.

Although not shown, the mowing robot may also include a communication module, a sensor module, a prompt module, etc., which will not be repeated here.

The communication module is configured to transmit and receive signals during transmitting and receiving information, and to enable signal transmitting and receiving between a user device and a base station or a server by means of establishing a communication connection with the user device, the base station or the server.

The sensor module is configured to collect internal or external environmental information, and to feed the collected environmental data back to the control module for making a decision, thereby achieving the functions of precise positioning and intelligent obstacle avoidance of the mowing robot. Optionally, the sensor may include an ultrasonic sensor, an infrared sensor, an impact sensor, a rain sensor, a LIDAR sensor, an inertial measurement unit, a tachometer, an image sensor, a position sensor and other sensors, which are not limited.

The prompt module is configured to indicate the current operating status of the mowing robot to the user. In this scheme, the prompt module includes, but is not limited to, an indicator light, a buzzer, and the like. For example, the mowing robot can indicate to the user the current status of the power source, the operating status of an electric motor, the operating status of the sensor, etc. by means of the indicator light. For another example, if a malfunction or theft of the mowing robot is detected, an alert can be provided by the buzzer.

Specifically, in this embodiment, the processor of the control module 501 may load executable files corresponding to the processes of one or more applications into the memory, and the applications stored in the memory is run by the processor in accordance with the following instructions so as to achieve various functions:
detecting an obstacle in a current path during operation of the mowing robot; generating a first obstacle avoidance path with a first parameter based on a detection result, and controlling the mowing robot to operate based on the first obstacle avoidance path; if the obstacle is detected again in the first obstacle avoidance path, generating a second obstacle avoidance path with a second parameter, and controlling the mowing robot to operate based on the second obstacle avoidance path, where the second parameter is greater than the first parameter; and repeating the above steps until the obstacle in the current path is bypassed.

For the implementation of the above various operations, reference may be made to the foregoing embodiments, which will not be repeated here.

According to this embodiment of the present application, the obstacle in the current path may be detected during operation of the mowing robot; the first obstacle avoidance path is generated with the first parameter based on the detection result, and the mowing robot is controlled to operate based on the first obstacle avoidance path; if the obstacle is detected again in the first obstacle avoidance path, the second obstacle avoidance path is generated with the second parameter, and the mowing robot is controlled to operate based on the second obstacle avoidance path, where the second parameter is greater than the first parameter; and the above steps are repeated until the obstacle in the current path is bypassed. In this embodiment of the present application, the first obstacle avoidance path is generated when the obstacle is detected, and the second obstacle avoidance path with a larger range is generated when the obstacle is detected again during traveling of the mowing robot along the first obstacle avoidance path. In this way, an obstacle avoidance path can be generated adaptively, thereby improving the efficiency and flexibility of the mowing robot in obstacle avoidance.

Those of ordinary skill in the art will appreciate that all or some of the steps of the various methods of the foregoing embodiments may be completed by the instructions, or be completed by controlling associated hardware by means of the instructions which may be stored in a computer-readable storage medium and loaded and executed by the processor.

To this end, an embodiment of the present application provides a storage medium storing a plurality of instructions which can be loaded by a processor to perform the steps of any one of the intelligent obstacle avoidance methods provided in the embodiments of the present application. For example, the instructions may cause the following steps to be carried out:
detecting an obstacle in a current path during operation of a mowing robot; generating a first obstacle avoidance path with a first parameter based on a detection result, and controlling the mowing robot to operate based on the first obstacle avoidance path; if the obstacle is detected again in the first obstacle avoidance path, generating a second obstacle avoidance path with a second parameter, and controlling the mowing robot to operate based on the second obstacle avoidance path, where the second parameter is greater than the first parameter; and repeating the above steps until the obstacle in the current path is bypassed.

For the implementation of the above various operations, reference may be made to the foregoing embodiments, which will not be repeated here.

The storage medium may include a read only memory (ROM), a random access memory (RAM), a magnetic disk or an optical disc, and the like.

With the instructions stored in the storage medium, the steps of any one of the intelligent obstacle avoidance methods provided in the embodiments of the present application may be performed, and the benefits achievable by any one of the intelligent obstacle avoidance methods provided in the embodiments of the present application can thus be achieved. See the foregoing embodiments for details, which will not be repeated here.

The intelligent obstacle avoidance method, the mowing robot, and the storage medium provided in the embodiments of the present application are described in detail above, and the principles and implementations of the present application are set forth by way of specific examples herein. The descriptions of the foregoing embodiments are merely intended to facilitate understanding of the method according to the present application and the core idea thereof. In addition, for those skilled in the art, changes may be made to the specific implementations and application range based on the idea of the present application. In conclusion, the contents of this specification should not be construed as a limitation to the present application.

## Claims

1. An intelligent obstacle avoidance method, **characterized by** comprising:
S11: during operation of a mowing robot, detecting an obstacle in a current path;
S12: generating a first obstacle avoidance path with a first parameter based on a detection result, and controlling the mowing robot to operate according to the first obstacle avoidance path;
S13: in the first obstacle avoidance path, if the obstacle is detected again, generating a second obstacle avoidance path with a second parameter, wherein the second parameter is greater than the first parameter, and controlling the mowing robot to operate according to the second obstacle avoidance path; and
S14: repeating S12 and S13 until the obstacle in the current path has been bypassed.

2. The method according to claim 1, **characterized in that** the generating the first obstacle avoidance path with the first parameter based on the detection result comprises:
obtaining characteristic information of the obstacle; and
calculating the first parameter based on the characteristic information of the obstacle, and generating the first obstacle avoidance path along a current mowing direction with the first parameter.

3. The method according to claim 2, **characterized in that** the characteristic information of the obstacle comprises a horizontal width of the obstacle; and
the calculating the first parameter based on the characteristic information of the obstacle, and generating the first obstacle avoidance path along a current mowing direction with the first parameter comprises:
calculating a first length range based on the horizontal width of the obstacle, and
generating the first obstacle avoidance path along the current mowing direction that satisfies the first length range.

4. The method according to claim 3, **characterized in that** the generating the first obstacle avoidance path along the current mowing direction that satisfies the first length range comprises:
determining a side length parameter based on the first length range, and generating a first polyline path along the current mowing direction with the side length parameter; and/or
determining an arc angle parameter and an arc length parameter based on the first length range, and generating a first arc path along the current mowing direction with the arc angle parameter and the arc length parameter.

5. The method according to claim 2, **characterized in that** the generating the second obstacle avoidance path with the second parameter, and controlling the mowing robot to operate according to the second obstacle avoidance path comprises:
updating the characteristic information of the obstacle;
determining the second parameter with updated characteristic information, and generating the second obstacle avoidance path based on the second parameter; and
controlling the mowing robot to return to a starting point of the first obstacle avoidance path, and controlling the mowing robot to operate according to the second obstacle avoidance path.

6. The method according to claim 1, **characterized in that** after the obstacle is detected again in the first obstacle avoidance path, the method further comprises:
determining whether the obstacle moves when the mowing robot operates according to the first obstacle avoidance path; and
if the obstacle does not move, performing the step of generating a second obstacle avoidance path with a second parameter, or
if the obstacle moves, generating a first obstacle avoidance path again with a current position of the mowing robot, and controlling the mowing robot to operate according to the first obstacle avoidance path.

7. The method according to claim 1, **characterized in that** the generating the first obstacle avoidance path with the first parameter based on a detection result comprises:
dividing a horizontal angle of the obstacle into a left deflection angle and a right deflection angle along an orientation of the mowing robot;
comparing the left deflection angle with the right deflection angles to determine a deflection direction; and
generating the first obstacle avoidance path based on the deflection direction and the first parameter.

8. The method according to claim 1, **characterized by** further comprising:
obtaining a number of times the obstacle is detected again in the first obstacle avoidance path; and
generating warning information to prompt a user when the number of times exceeds a preset number of times.

9. A mowing robot, **characterized by** comprising a memory, a processor, and a computer program stored on the memory and executable on the processor, wherein the program, when executed by the processor, causes the steps of the intelligent obstacle avoidance method according to any one of claims 1 to 8 to be implemented.

10. A storage medium **characterized by** storing a computer program, wherein the computer program, when executed by a processor, causes the steps of the intelligent obstacle avoidance method according to any one of claims 1 to 8 to be implemented.
